# EUROPÄISCHE PATENTANMELDUNG

(11) **EP 4 372 138 A1**
(43) Veröffentlichungstag der Anmeldung: **22.05.2024**
(21) Anmeldenummer: 23205866.9
(22) Anmeldetag: 25.10.2023
(51) Int. Cl.: D06F 34/32, F24C 7/08, G06F 3/01, A47L 15/42, D06F 101/00, G06F 3/044

(54) **HAUSHALTSGERÄT MIT INDIVIDUALISIERBAREM BERÜHRUNGSEMPFINDLICHEM EINGABE- UND ANZEIGETEIL SOWIE VERFAHREN ZU SEINEM BETRIEB**

(30) Priorität: 15.11.2022 DE 102022212134
(71) Anmelder: BSH Hausgeräte GmbH, 81739 München (DE)
(72) Erfinder: Gérard, Nina, 23564 Lübeck (DE); Fuchs, Constanze, 10439 Berlin (DE)

(57) **Zusammenfassung**

Die Erfindung betrifft ein Haushaltsgerät mit einem Gehäuse, einer Steuerungseinheit und einem Eingabe- und Anzeigeteil 1 mit einer Flüssigkristallanzeige 2, das zur Anzeige von mehreren Parametern 3 eines im Haushaltsgerät durchgeführten Arbeitsprogramms eingerichtet ist, wobei die Flüssigkristallanzeige 2 in einem ersten Eingabe- und Anzeigeteil 4 enthalten ist und das Haushaltsgerät zusätzlich ein zweites Eingabe- und Anzeigeteil 5 ohne Flüssigkristallanzeige enthält, das ein erstes berührungsempfindliches Eingabe- und Anzeigeelement 6 enthält, das eingerichtet ist, um bei seiner Berührung eine Anzeige und Auswahl eines zweiten und weiterer berührungsempfindlicher Eingabeelemente 7,8,9,10,11,12 zu ermöglichen. Die Erfindung betrifft außerdem ein Verfahren zum Betrieb dieses Haushaltsgerätes.

## Beschreibung

Die Erfindung betrifft ein Haushaltsgerät mit einem individualisierbaren berührungsempfindlichen Eingabe- und Anzeigeteil sowie ein Verfahren zu seinem Betrieb. Die Erfindung betrifft insbesondere ein Haushaltsgerät mit einem Gehäuse, einer Steuerungseinheit und einem Eingabe- und Anzeigeteil mit einer Flüssigkristallanzeige, das zur Anzeige von mehreren Parametern eines im Haushaltsgerät durchgeführten Arbeitsprogramms eingerichtet ist, sowie ein Verfahren zu seinem Betrieb.

Haushaltsgeräte weisen im Allgemeinen eine Frontblende auf, welche die Möglichkeit der Einstellung von im Haushaltsgerät durchzuführenden Programmen bietet, sowie eine Darstellung von Informationen über die Durchführung eines ausgewählten Programms. Haushaltsgeräte sind hierbei beispielsweise Wäschebehandlungsgeräte wie Waschmaschinen, Trockner und Waschtrockner, Geschirrspülmaschinen, Mikrowellengeräte, Backöfen und -herde, Kaffeemaschinen sowie Mixgeräte.

Bei vielen Haushaltsgeräten ist ein Drehwähler, auch Drehschalter genannt, vorhanden, der beispielsweise in der Mitte einer Bedienblende positioniert ist. Ein auf dem Drehwähler angebrachter Punkt kann dabei eine Programmwahl anzeigen oder quittieren. Zusätzlich oder alternativ können ausgewählte Programme durch eine Beleuchtung der Programmwahlbezeichnungen angezeigt werden. Statt eines Drehwählers wird häufig auch ein Tastenwahlfeld o.ä. verwendet.

Zur Bedienung von Computern und Smartphones ist es sehr beliebt, eine berührungsempfindliche Anzeige- und Bedieneinheit zu verwenden, die eine Anzeigevorrichtung mit einer Bedieneinrichtung kombiniert und im Folgenden auch als "Touchscreen" bezeichnet wird. Dieser ermöglicht prinzipiell eine angenehme und rasche Bedienung des betreffenden Gerätes. Es gibt daher zahlreiche Patentanmeldungen und Patente betreffend Touchscreens, beispielsweise die US-Patente Nr. 5,559,301, 6,130,665 und 6,542,171.

Im Rahmen der Entwicklung von Benutzeroberflächen ist ein Problem aufgetaucht, das spezifisch für LED-Geräte ist, d.h. Haushaltsgeräte mit einer Flüssigkristallanzeige. Aufgrund der festen Hardware wird dem Benutzer fast jede Funktion auf der ersten Ebene der Benutzeroberfläche angeboten. Die Nutzer können jedoch in zwei Gruppen mit unterschiedlichen Bedürfnissen unterteilt werden. Die größte Nutzergruppe sind die "pragmatischen Nutzer", die in der Regel 1-3 Programme und 0-1 zusätzliche Optionen nutzen und daher eine saubere und übersichtliche, einfache Benutzeroberfläche suchen. Die Gruppe der "kontrollierten Nutzer" entdeckt und nutzt gerne verschiedene und innovative Funktionen. Pragmatische Nutzer bei LED-Geräten mit fester Hardware sind mit einer Überflutung mit Funktionen, Tasten und Anzeigen auf der Benutzeroberfläche konfrontiert. Diese müssen jedoch angeboten werden, um die kontrollierten Nutzer zu befriedigen.

Vor diesem Hintergrund war es Aufgabe der vorliegenden Erfindung, ein Haushaltsgerät mit einem individualisierbaren berührungsempfindlichen Eingabe- und Anzeigeteil bereitzustellen. Vorzugsweise sollte das Eingabe- und Anzeigeelement permanent einstellbar sein, so dass insbesondere eine solche individualisierte Einstellung auch bei einem Ausschalten des Haushaltsgerätes erhalten bleibt. Gegebenenfalls sollte es möglich sein, die Vorteile eines Drehwählers und einer berührungsempfindlichen Bedieneinheit auf einer Bedienblende zu verbinden und somit insgesamt eine verbesserte Bedienbarkeit des Haushaltsgerätes zu erreichen. Aufgabe der Erfindung war es außerdem, ein Verfahren zum Betrieb eines solchen Haushaltsgeräts bereitzustellen.

Die Lösung dieser Aufgabe wird nach dieser Erfindung erreicht durch ein Haushaltsgerät und ein zum Betrieb dieses Haushaltsgerätes geeignetes Verfahren mit den Merkmalen der entsprechenden unabhängigen Patentansprüche. Bevorzugte Ausführungsformen des erfindungsgemäßen Haushaltsgeräts sowie des erfindungsgemäßen Verfahrens sind gegebenenfalls in den jeweiligen abhängigen Patentansprüchen aufgeführt. Bevorzugten Ausführungsformen des erfindungsgemäßen Haushaltsgeräts entsprechen bevorzugte Ausführungsformen des erfindungsgemäßen Verfahrens und umgekehrt, auch wenn dies hierin nicht explizit festgestellt ist.

Gegenstand der Erfindung ist somit ein Haushaltsgerät mit einem Gehäuse, einer Steuerungseinheit und einem Eingabe- und Anzeigeteil mit einer Flüssigkristallanzeige, das zur Anzeige von mehreren Parametern eines im Haushaltsgerät durchgeführten Arbeitsprogramms eingerichtet ist, wobei die Flüssigkristallanzeige in einem ersten Eingabe- und Anzeigeteil enthalten ist und das Haushaltsgerät zusätzlich ein zweites Eingabe- und Anzeigeteil ohne Flüssigkristallanzeige enthält, das ein erstes berührungsempfindliches Eingabe- und Anzeigeelement enthält, das eingerichtet ist, um bei seiner Berührung eine Anzeige und Auswahl eines zweiten und weiterer berührungsempfindlicher Eingabeelemente zu ermöglichen. Geeignete Parameter sind beispielsweise die Temperatur (Waschtemperatur), die Umdrehungszahl einer Trommel und die Programmdauer in einer Waschmaschine.

Vorzugsweise befinden sich im erfindungsgemäßen Haushaltsgerät der erste Eingabe- und Anzeigeteil und der zweite Eingabe- und Anzeigeteil auf einem gemeinsamen Bedienpanel. Es ist dabei ein Haushaltsgerät bevorzugt, bei dem auf dem gemeinsamen Bedienpanel auch ein berührungsempfindlicher Drehwähler angeordnet ist.

In einer besonders bevorzugten Ausführungsform des Haushaltsgerätes ist die Steuerungseinheit eingerichtet, um bei einer Berührung des ersten berührungsempfindlichen Eingabe- und Anzeigeelements für einen Zeitraum Δt, eine optische Sichtbarkeit eines zweiten und weiterer berührungsempfindlicher Eingabeelemente zu ermöglichen und bei einer Berührung des ersten berührungsempfindlichen Eingabe- und Anzeigeelementes für einen Zeitraum Δt₂, der größer ist als der Zeitraum Δt₁, eine Auswahl eines zweiten und weiterer berührungsempfindlicher Eingabeelemente zu ermöglichen, derart, dass ein oder mehrere ausgewählte Eingabeelemente anschließend permanent sichtbar sind. Dabei geschieht vorzugsweise die Auswahl durch das Berühren des zweiten und/oder weiterer berührungsempfindlicher Eingabeelemente für einen Zeitraum Δt₃, der kürzer ist als der Zeitraum Δt₂. Schließlich ist dabei auch bevorzugt, dass der Zeitraum Δt, gleich dem Zeitraum Δt₃ ist.

Erfindungsgemäß ist überdies ein Haushaltsgerät bevorzugt, das eingerichtet ist, um eine Auswahl eines zweiten und weiterer berührungsempfindlicher Eingabeelemente auch nach einem Ausschalten des Haushaltsgerätes beizubehalten. Eine Wiederherstellung des ursprünglichen Zustandes ist dabei im Allgemeinen möglich, insbesondere im Allgemeinen eine Änderung der Einstellungen bzw. Einstellmöglichkeiten durch erneutes Betätigen des ersten berührungsempfindlichen Eingabe- und Anzeigeelementes.

Im erfindungsgemäßen Haushaltsgerät ist die Flüssigkristallanzeige vorzugsweise eingerichtet, um zumindest einen auf der Flüssigkristallanzeige angezeigten Parameter zu verändern. Hierzu können sich beispielsweise unter- und oberhalb der Parameteranzeigen berührungsempfindliche Pfeiltasten befinden.

Ein Haushaltsgerät im Sinne der Erfindung ist nicht beschränkt, aber vorzugsweise ein Haushaltsgerät zur Behandlung von Gegenständen. Ein solches Haushaltsgerät kann z.B. eine Waschmaschine, ein Trockner, ein Waschtrockner, eine Kaffeemaschine, ein Kühlschrank, ein Ofen, aber auch eine Mikrowelle oder ein Herd bzw. Kochfeld sein. Zur Aufnahme und zur Behandlung der Gegenstände umfasst das Haushaltsgerät dann im Allgemeinen einen Behandlungsraum. Ist das Haushaltsgerät beispielsweise eine Waschmaschine, ein Trockner oder ein Waschtrockner, so kann der Behandlungsraum eine Trommel sein. Ist das Haushaltsgerät ein Herd, so kann der Behandlungsraum auch eine Ofenmuffel sein. Vorzugsweise ist das Haushaltsgerät ein wasserführendes Haushaltsgerät oder ein Ofen. Dabei ist es wiederum bevorzugt, dass es ein wasserführendes Haushaltsgerät aus der Gruppe bestehend aus einer Waschmaschine und einem Waschtrockner ist.

Zur Ausgestaltung der Berührungsempfindlichkeit der berührungsempfindlichen Eingabeelemente können unterschiedliche physikalische Prinzipien herangezogen werden. Dabei ist es bevorzugt, dass das erste berührungsempfindliche Eingabe- und Anzeigeelement und/oder das zweite und weitere berührungsempfindliche Eingabeelemente bei einer Berührung durch einen Benutzer eine Änderung einer elektrischen Kapazität zeigen. Hierbei ist es wiederum bevorzugt, dass das erste berührungsempfindliche Eingabe- und Anzeigeelement und/oder das zweite und weitere berührungsempfindliche Eingabeelemente eine Folie mit einem kapazitiven Sensor aufweist oder auf einer Folie gebildet sind.

In einer bevorzugten Ausführungsform des erfindungsgemäßen Haushaltsgerätes weist der Eingabe- und Anzeigeteil ein weiteres Eingabeteil auf, zum Beispiel einen berührungsempfindlichen Drehwähler (Touchdrehwähler), der mehrere leitfähige Segmente aufweist, im Allgemeinen auf einer Innenoberfläche der Bedienblende. Es kann aber auch ein Tastenwahlfeld oder ähnliches verwendet werden.

Der optional vorgesehene Touchdrehwähler kann so ausgestaltet sein, dass lediglich durch eine Drehbewegung mit einem Finger ein Betriebsprogramm und/oder Betriebsparameter des Haushaltsgerätes ausgewählt werden können. Es ist allerdings auch möglich, dass der Touchdrehwähler so ausgestaltet ist, dass durch Berühren zumindest eines Teiles seiner Oberfläche eine Steuerung des Haushaltsgerätes vorgenommen werden kann.

Die erfindungsgemäß vorgesehenen berührungsempfindlichen Eingabe- und Anzeigeelemente können verschiedenartige Materialien aufweisen, beispielsweise eine berührungsempfindliche anorganische oder organische Schicht, beispielsweise aus einem anorganischen oder organischen Halbleitermaterial, die beispielsweise in einer Folie aus einem organischen Material enthalten sind. Die berührungsempfindlichen Flächen der berührungsempfindlichen Eingabe- und Anzeigeelemente enthalten im Allgemeinen mindestens eine Elektrode, die mit einer Auswerteelektronik verbunden ist. Der Begriff "Auswerteelektronik" bezieht sich hierbei auf die Auswertung von weitergeleiteten Berührungssignalen von der oder den berührungsempfindlichen Flächen.

Die Oberfläche des Eingabe- und Anzeigeteils bzw. des Bedienpanels kann unterschiedlich sein. So können bestimmte haptische Gestaltungen die Bedienung des Eingabe- und Anzeigeteils und damit des Haushaltsgerätes vereinfachen.

Im Allgemeinen sind beim Haushaltsgerät in der Steuereinheit dem Eingabe- und Anzeigeteil Programme zugeordnet, die im Haushaltsgerät durchgeführt werden können. Bei Verwendung eines optionalen Drehwählers kann beispielsweise nach der Herstellung einer kommunizierenden Verbindung zwischen dem Drehwähler und einem darin ausgewählten Teilbereich ein entsprechendes Programm durchgeführt werden.

Gegenstand der Erfindung ist außerdem ein Verfahren zum Betrieb eines Haushaltsgerätes mit einem Gehäuse, einer Steuerungseinheit und einem Eingabe- und Anzeigeteil mit einer Flüssigkristallanzeige, das zur Anzeige von mehreren Parametern eines im Haushaltsgerät durchgeführten Arbeitsprogramms eingerichtet ist, wobei die Flüssigkristallanzeige in einem ersten Eingabe- und Anzeigeteil enthalten ist und das Haushaltsgerät zusätzlich ein zweites Eingabe- und Anzeigeteil ohne Flüssigkristallanzeige enthält, das ein erstes berührungsempfindliches Eingabe- und Anzeigeelement enthält, das eingerichtet ist, um bei seiner Berührung eine Anzeige und Auswahl eines zweiten und weiterer berührungsempfindlicher Eingabeelemente zu ermöglichen, wobei das Verfahren den oder die folgenden Schritte umfasst:
Berühren des ersten berührungsempfindlichen Eingabe- und Anzeigeelementes mit einem länglichen Körper, insbesondere einem Finger, für einen Zeitraum Δt, , um eine optische Sichtbarkeit eines zweiten und weiterer berührungsempfindlicher Eingabeelemente zu ermöglichen und bei einer Berührung des ersten berührungsempfindlichen Eingabe- und Anzeigeelementes für einen Zeitraum Δt₂, der größer ist als der Zeitraum Δt₁, eine Auswahl eines zweiten und weiterer berührungsempfindlicher Eingabeelemente zu ermöglichen, derart, dass ein oder mehrere ausgewählte Eingabeelemente permanent sichtbar sind.

In einer bevorzugten Ausführungsform dieses Verfahrens tritt dabei an den Eingabeelementen eine Änderung einer elektrischen Kapazität auf.

Die Erfindung hat zahlreiche Vorteile. Der Benutzer kann die Funktionen auswählen, die er auf einem LED-Gerät angezeigt haben möchte, um die Benutzeroberfläche an seine individuellen Bedürfnisse anzupassen. Dies ermöglicht einerseits eine reduzierte, einfache und übersichtliche Oberfläche für einen pragmatischen Benutzer, aber andererseits auch eine Vielfalt der verfügbaren Funktionen für einen kontrollierten Benutzer. Der Benutzer kann die Funktionen, die er häufig benutzt oder auf die er leicht zugreifen möchte, individuell auswählen und sie auf der LED-Oberfläche anzeigen lassen und Funktionen, die er nicht nutzt, ausblenden. Dies ermöglicht eine individuelle Schnittstelle mit einer einfacheren, an die Bedürfnisse des einzelnen Benutzers angepassten Struktur, die bisher aufgrund der mit der LED-Technologie einhergehenden festen Hardware nicht möglich war. Es ist somit eine Befriedigung der bisher "inkompatiblen" Nutzergruppen von pragmatischen und kontrollierten Nutzern innerhalb ein und desselben LED-Geräts möglich, indem man dem Benutzer die Möglichkeit gibt, zu entscheiden, welche und wie viele Funktionen er permanent auf dem Display sehen möchte.

Damit ergibt sich insgesamt ein gezielteres und präziseres Auswählen eines Arbeitsprogrammes, beispielsweise eines Waschprogrammes in einer Waschmaschine oder einem Waschtrockner, so dass ein Benutzer für sich ein energieeffizientes Verfahren mit entsprechenden Parameters aussuchen kann. Ein auf die Bedürfnisse eines Benutzers abgestelltes optimales Verfahren ist möglich, ohne dass evtl. energie- oder zeitintensive Prozesse oder Einstellungen durchgeführt werden müssen.

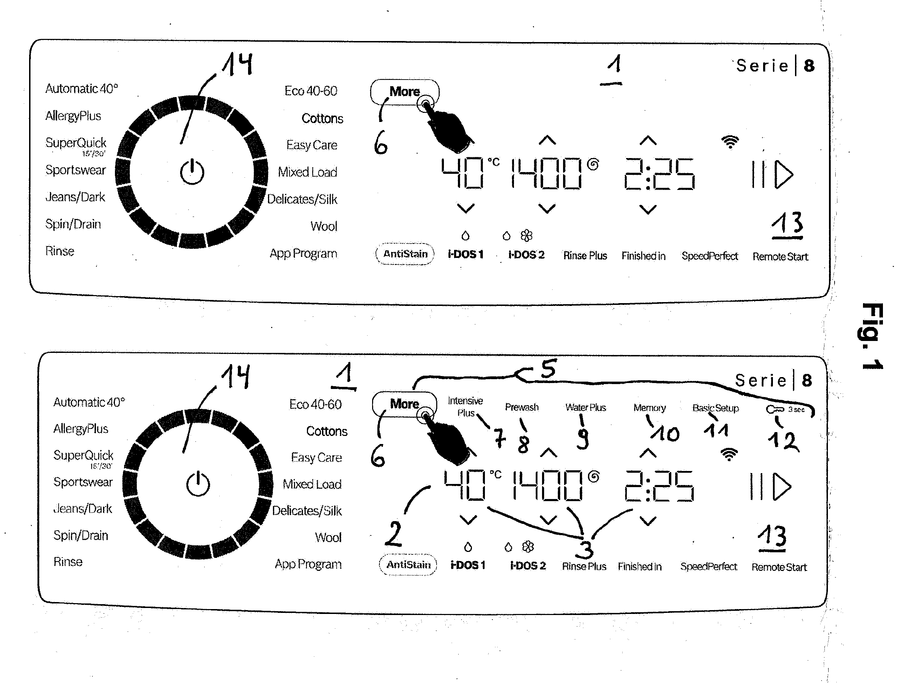

Weitere Einzelheiten der Erfindung ergeben sich aus der nachfolgenden Beschreibung nicht einschränkender Ausführungsformen. Hierbei wird Bezug genommen auf die Figuren 1 bis 3, in denen ein in einem erfindungsgemäßen Haushaltsgerät, hier beispielhaft eine Waschmaschine, eingesetztes Eingabe- und Anzeigeteil gezeigt wird. Dabei werden wie folgt in den einzelnen Darstellungen unterschiedliche Zustände eines beispielhaft verwendeten Eingabe- und Anzeigeteils gezeigt.

Fig. 1 zeigt oben den Zustand eines für sämtliche Eingabe- und Anzeigeteile 2 und 5 sowie einem berührungsempfindlichen Drehwähler 14 verwendeten gemeinsamen Bedienpanels 13, bei dem am Drehwähler 14 das Programm "Cottons" ausgewählt ist. Gezeigt wird ein erstes Eingabe- und Anzeigeteil 4, in dem eine Flüssigkristallanzeige 2 angeordnet ist, das zur Anzeige von hier drei Parametern 3 des in der Waschmaschine durchgeführten Arbeitsprogramms eingerichtet ist.

Durch kurzzeitiges Berühren eines ersten berührungsempfindlichen Eingabe- und Anzeigeelements 6 in einem zweiten Eingabe- und Anzeigeteil 5, das keine Flüssigkristallanzeige enthält und eingerichtet ist, um bei seiner Berührung eine Anzeige und Auswahl eines zweiten und weiterer berührungsempfindlicher Eingabeelemente 7,8,9,10,11,12 zu ermöglichen, können einem Benutzer verschiedene weitere Einstellmöglichkeiten angezeigt werden.

Unten in Fig. 1 sind nach inzwischen erfolgtem kurzzeitigen Berühren des ersten berührungsempfindlichen Eingabe- und Anzeigeelements 6 das zweite und weitere berührungsempfindliche Eingabeelemente 7,8,9,10,11,12 zu erkennen. Einem Benutzer der Waschmaschine werden damit diverse Einstellmöglichkeiten angezeigt, von denen er sich gewünschte Einstellmöglichkeiten in weiteren hier nicht gezeigten Schritten permanent anzeigen lassen kann.

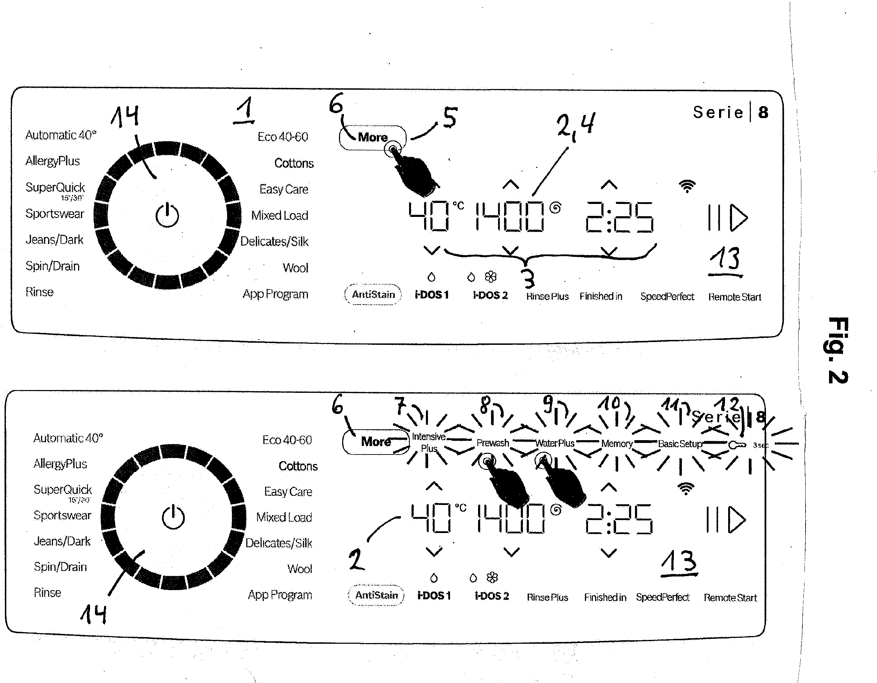

Fig. 2 zeigt oben zunächst eine zur oberen Ansicht in Fig. 1 identische Ansicht von Bedienpanel 13. In der unmittelbar darunter angezeigten Ansicht ist das Bedienpanel 13 nach einem etwas längeren Berühren von Anzeigeelement 6 gezeigt. Die weiteren berührungsempfindlichen Eingabeelemente 7,8,9,10,11,12 sind aufgrund der längeren Berührungsdauer nicht nur angezeigt, sondern durch eine Beleuchtung, die auch als Blinken realisiert werden kann, hervorgehoben. Damit wird einem Benutzer angezeigt, dass er nun die von ihm für eine permanente Anzeige erwünschten Eingabeelemente durch deren direkte Berührung auswählen kann. Gezeigt ist hier die Berührung der Eingabeelemente 8 und 9.

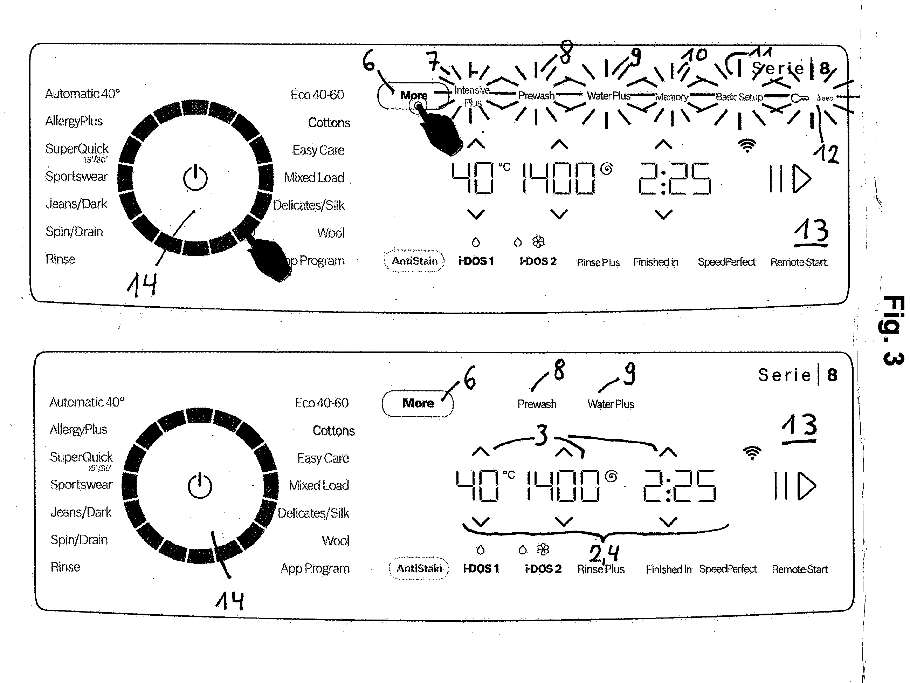

Fig. 3 ist eine Fortsetzung von Fig. 2, wobei zunächst durch erneutes Drücken des ersten berührungsempfindlichen Eingabe- und Anzeigeelement 6 die Auswahl bestätigt wird. In der unteren Ansicht von Fig. 3 sind diese Eingabeelemente 8 und 9 daher permanent sichtbar und vom Benutzer direkt wählbar.

### Bezugszeichenliste

- 1: Eingabe- und Anzeigeteil (eines Bedienpanels)
- 2: Flüssigkristallanzeige
- 3: Anzeige mehrerer Parameter eines Arbeitsprogrammes
- 4: erstes Eingabe- und Anzeigeteil
- 5: zweites Eingabe- und Anzeigeteil
- 6: erstes berührungsempfindliches Eingabe- und Anzeigeelement
- 7-12: zweites und weitere berührungsempfindliche Eingabeelemente Displaybereich
- 13: gemeinsames Bedienpanel
- 14: berührungsempfindlicher Drehwähler

## Patentansprüche

1. Haushaltsgerät mit einem Gehäuse, einer Steuerungseinheit und einem Eingabe- und Anzeigeteil (1) mit einer Flüssigkristallanzeige (2), das zur Anzeige von mehreren Parametern (3) eines im Haushaltsgerät durchgeführten Arbeitsprogramms eingerichtet ist, **dadurch gekennzeichnet, dass** die Flüssigkristallanzeige (2) in einem ersten Eingabe- und Anzeigeteil (4) enthalten ist und das Haushaltsgerät zusätzlich ein zweites Eingabe- und Anzeigeteil (5) ohne Flüssigkristallanzeige enthält, das ein erstes berührungsempfindliches Eingabe- und Anzeigeelement (6) enthält, das eingerichtet ist, um bei seiner Berührung eine Anzeige und Auswahl eines zweiten und weiterer berührungsempfindlicher Eingabeelemente (7 ,8, 9, 10, 11, 12) zu ermöglichen.

2. Haushaltsgerät nach Anspruch 1, **dadurch gekennzeichnet, dass** sich der erste Eingabe- und Anzeigeteil (4) und der zweite Eingabe- und Anzeigeteil (5) auf einem gemeinsamen Bedienpanel (13) befinden.

3. Haushaltsgerät nach Anspruch 2, **dadurch gekennzeichnet, dass** auf dem gemeinsamen Bedienpanel (13) auch ein berührungsempfindlicher Drehwähler (14) angeordnet ist.

4. Haushaltsgerät nach einem der Ansprüche 1 bis 3, **dadurch gekennzeichnet, dass** die Steuerungseinheit eingerichtet ist, um bei einer Berührung des ersten berührungsempfindlichen Eingabe- und Anzeigeelements (6) für einen Zeitraum Δt, eine optische Sichtbarkeit eines zweiten und weiterer berührungsempfindlicher Eingabeelemente (7, 8, 9, 10, 11, 12) zu ermöglichen und bei einer Berührung des ersten berührungsempfindlichen Eingabe- und Anzeigeelementes (6) für einen Zeitraum Δt₂, der größer ist als der Zeitraum Δt_{1 ,} eine Auswahl eines zweiten und weiterer berührungsempfindlicher Eingabeelemente (7, 8, 9, 10, 11, 12) zu ermöglichen, derart, dass ein oder mehrere ausgewählte Eingabeelemente (7, 8, 9, 10, 11, 12) permanent sichtbar sind.

5. Haushaltsgerät nach Anspruch 4, **dadurch gekennzeichnet, dass** die Auswahl durch das Berühren des zweiten und/oder weiterer berührungsempfindlicher Eingabeelemente (7, 8, 9, 10, 11, 12) für einen Zeitraum Δt₃, der kürzer ist als der Zeitraum Δt₂ ist, geschieht.

6. Haushaltsgerät nach Anspruch 5, **dadurch gekennzeichnet, dass** der Zeitraum Δt, gleich dem Zeitraum Δt₃ ist.

7. Haushaltsgerät nach einem der Ansprüche 1 bis 6, **dadurch gekennzeichnet, dass** es eingerichtet ist, um eine Auswahl eines zweiten und weiterer berührungsempfindlicher Eingabeelemente (7, 8, 9, 10, 11, 12) auch nach einem Ausschalten des Haushaltsgerätes beizubehalten.

8. Haushaltsgerät nach einem der Ansprüche 1 bis 7, **dadurch gekennzeichnet, dass** die Flüssigkristallanzeige (2) eingerichtet ist, um zumindest eines auf der Flüssigkristallanzeige (2) angezeigten Parameters zu verändern.

9. Haushaltsgerät nach einem der Ansprüche 1 bis 8, **dadurch gekennzeichnet, dass** es ein wasserführendes Haushaltsgerät oder ein Ofen ist.

10. Haushaltsgerät nach Anspruch 9, **dadurch gekennzeichnet, dass** es ein wasserführendes Haushaltsgerät aus der Gruppe bestehend aus einer Waschmaschine und einem Waschtrockner ist.

11. Haushaltsgerät nach einem der Ansprüche 1 bis 10, **dadurch gekennzeichnet, dass** das erste berührungsempfindliche Eingabe- und Anzeigeelement (6) und/oder das zweite und weitere berührungsempfindliche Eingabeelemente (7, 8, 9, 10, 11, 12) bei einer Berührung durch einen Benutzer eine Änderung einer elektrischen Kapazität zeigen.

12. Haushaltsgerät nach Anspruch 11, **dadurch gekennzeichnet, dass** das erste berührungsempfindliche Eingabe- und Anzeigeelement (6) und/oder das zweite und weitere berührungsempfindliche Eingabeelemente (7, 8, 9, 10, 11, 12) eine Folie mit einem kapazitiven Sensor aufweist.

13. Verfahren zum Betrieb eines Haushaltsgerätes mit einem Gehäuse, einer Steuerungseinheit und einem Eingabe- und Anzeigeteil (1) mit einer Flüssigkristallanzeige (2), das zur Anzeige von mehreren Parametern (3) eines im Haushaltsgerät durchgeführten Arbeitsprogramms eingerichtet ist, wobei die Flüssigkristallanzeige (2) in einem ersten Eingabe- und Anzeigeteil (4) enthalten ist und das Haushaltsgerät zusätzlich ein zweites Eingabe- und Anzeigeteil (5) ohne Flüssigkristallanzeige enthält, das ein erstes berührungsempfindliches Eingabe- und Anzeigeelement (6) enthält, das eingerichtet ist, um bei seiner Berührung eine Anzeige und Auswahl eines zweiten und weiterer berührungsempfindlicher Eingabeelemente (7, 8, 9, 10, 11, 12) zu ermöglichen, wobei das Verfahren Berühren des ersten berührungsempfindlichen Eingabe- und Anzeigeelementes (6) mit einem länglichen Körper, insbesondere einem Finger für einen Zeitraum Δt, , um eine optische Sichtbarkeit eines zweiten und weiterer berührungsempfindlicher Eingabeelemente (7, 8, 9, 10, 11, 12) zu ermöglichen und bei einer Berührung des ersten berührungsempfindlichen Eingabe- und Anzeigeelementes (6) für einen Zeitraum Δt₂, der größer ist als der Zeitraum Δt₁, eine Auswahl eines zweiten und weiterer berührungsempfindlicher Eingabeelemente (7, 8, 9, 10, 11, 12) zu ermöglichen, derart, dass ein oder mehrere ausgewählte Eingabeelemente (7, 8, 9, 10, 11, 12) permanent sichtbar sind.
